Europäisches Patentamt

European Patent Office

Office européen des brevets

(19)

(11) Veröffentlichungsnummer : **0 101 988**
**B1**

(12) **EUROPÄISCHE PATENTSCHRIFT**

(45) Veröffentlichungstag der Patentschrift :
21.11.85

(51) Int. Cl.⁴ : **B 29 B  7/22, B 08 B  7/00**

(21) Anmeldenummer : **83107780.5**

(22) Anmeldetag : **08.08.83**

(54) Verfahren zum Entfernen von Kunststoffrückständen an Mischvorrichtungen und Formwerkzeugen.

(30) Priorität : **26.08.82 DE 3231795**

(43) Veröffentlichungstag der Anmeldung :
**07.03.84 Patentblatt 84/10**

(45) Bekanntmachung des Hinweises auf die Patenterteilung : **21.11.85 Patentblatt 85/47**

(84) Benannte Vertragsstaaten :
**BE DE FR GB IT NL**

(56) Entgegenhaltungen :
**DE-A- 2 643 959**
**DE-A- 2 732 064**
**DE-A- 2 807 402**

(73) Patentinhaber : **Elastogran Maschinenbau GmbH**

**D-8021 Strasslach (DE)**

(72) Erfinder : **Schlueter, Klaus**
**Windeckstrasse 1c**
**D-8000 Muenchen 70 (DE)**

(74) Vertreter : **Springer, Hans Jörg, Dr. et al**
**Carl-Bosch-Strasse 38**
**D-6700 Ludwigshafen (DE)**

## Beschreibung

Die Erfindung betrifft ein Verfahren und eine Vorrichtung zum Entfernen von Kunststoffrückständen an Mischvorrichtungen für Kunststoffkomponenten und an daraus zu befüllenden Formwerkzeugen durch Erhitzen der Rückstände.

Vorrichtungen zum Mischen von Kunststoffkomponenten — im Fachkreis als Mischkopf bezeichnet — besitzen einen Steuerkolben, der in der zurückgezogenen Stellung die Eintragsdüsen für die Komponenten und den Mischraum für den Mischvorgang freigibt. Zum Einfüllen des Komponentengemisches in ein Formwerkzeug ist dieses bei geschlossenen Formen gewöhnlich mit einem Einfüllkonus und der Mischkopf mit einem daran angepaßten Auslaufrohr ausgestattet. Der Steuerkolben geht nach Füllung des Formwerkzeugs in die Schließstellung, so daß der Mischvorgang beendet und Kunststoffreste ausgestoßen werden.

Es kommt dabei häufig vor, daß am Kolbenboden des Steuerkolbens und am Auslaufrohr des Mischkopfes sowie auch am Einfüllkonus des Formwerkzeugs Kunststoffrückstände haften bleiben, die aushärten und dann bei den nachfolgenden Misch- und Einfüllzyklen Störungen hervorrufen. Beispielsweise können in den Mischraum ragende Rückstände die aus den Eintragsdüsen austretenden Komponentenstrahlen ablenken und dadurch eine ungenügende Vermischung verursachen. Rückstände am Auslaufrohr oder Einfüllkonus können zu Undichtigkeiten zwischen diesen Teilen führen, so daß das sogenannte « Schußgewicht » — das ist die in das Formwerkzeug eingebrachte Kunststoffmenge — nicht dem vorgeschriebenen Gewicht entspricht. Ferner können an der undichten Stelle Luftblasen eingezogen werden, die Fehlstellen (Lunker) am Formteil hervorrufen. Unter Umständen kann dabei auch Gefahr durch unter Druck austretende Kunststoffmasse bestehen.

In der Fachpraxis hat es daher nicht an Versuchen gefehlt, entsprechende Gegenmaßnahmen zu treffen, beispielsweise durch Abstreifbleche oder rotierende Bürsten, die jedoch relativ rasch mit abgestreiftem Produkt verkleben und dann in ihrer Reinigungswirkung nachlassen. Auch hat man schon versucht, die Kunststoffrückstände durch Blasen mit Luft oder Lösungsmittel von den Teilen zu entfernen. Hierbei zeigte sich jedoch eine erhebliche Belastung der Umwelt und der Sicherheit. Bekannt ist auch der Einsatz eines Lösungsmittelbades, in das der Mischkopf getaucht wird, wobei das Lösungsmittel zur Reinigung ständig über ein Filter gepumpt werden muß. Abgesehen vom apparativen Aufwand ist diese Methode umständlich und zu langsam, so daß sie für die bei Serienbetrieb schnelle Folge von Arbeitszyklen nicht geeignet ist.

Aus der deutschen Patentanmeldung DE-A-2 807 402 ist ein Verfahren zum Entfernen von thermoplastischen Kunststoffrückständen an Verarbeitungsgeräten, insbesondere an Extruderschnecken, bekannt, bei dem das Gerät in einem Ofen einer pyrolytischen Behandlung unterzogen wird, so daß die Rückstände durch Erhitzen unter Luftabschluß zersetzt werden. Die abziehenden Zersetzungsgase werden anschließend verbrannt; abschmelzende Rückstandsteile werden aufgefangen. In einem nachfolgenden Verfahrensschritt werden die noch verbleibenden Rückstandsreste durch Einleiten von Luft in den Ofen oxidiert. Das Verfahren erfordert das Ausbauen der zu behandelnden Geräteteile aus der Vorrichtung, so daß neben der langwierigen Behandlung Ausfallzeiten der Vorrichtung und Montageaufwand in Kauf genommen werden müssen.

In der deutschen Patentanmeldung DE-A-2 732 064 ist ein Verfahren zum Entfernen von ausgehärteten Phenolplastharzrückständen von Preßblechen oder Preßformen beschrieben, bei dem ein Reinigungsfilm aus einer mit einem Reinigungsmittel getränkten saugfähigen Trägerbahn mittels einer Platte oder eines entsprechenden Formkörpers gegen das Preßblech oder die Preßform gepreßt wird.

Nach 2 bis 15 Minuten wird die Presse geöffnet und der Abpreßfilm entfernt. In einem zweiten Verfahrensschritt wird der Vorgang mit einer mit Phenolharzvorkondensat getränkten Trägerbahn und einer Holzwerkstoffplatte bzw. -formkörper wiederholt, um die restlichen, angelösten Rückstände vollständig zu entfernen. Die Rückstandsbeseitigung erfolgt hier auf chemisch/mechanischem Wege, wobei ein relativ hoher Kontaktdruck zwischen den zu reinigenden Teilen und dem Reinigungsmittel erforderlich ist. Das Verfahren ist daher hauptsächlich für Teile von Preßvorrichtungen geeignet; für im Serienbetrieb arbeitende Vorrichtungen hingegen ist es zu langwierig und aufwendig.

Demgemäß war nach einer Lösung zu suchen, die eine mit einem schnellen Arbeitszyklus schritthaltende, wirkungsvolle Reinigung von Mischvorrichtungen für Kunststoffkomponenten und daraus zu befüllenden Formwerkzeugen von Kunststoffrückständen gefahrlos und ohne Belastung der Umwelt ermöglicht.

Diese Aufgabe wurde durch ein Verfahren und eine Vorrichtung gelöst, wie sie in den Patentansprüchen charakterisiert sind.

Einzelheiten und Vorteile des erfindungsgemäßen Verfahrens und der Vorrichtung sind anhand in der Zeichnung dargestellter Ausführungsbeispiele nachfolgend beschrieben.

Es zeigen

Figur 1 einen Mischkopf im Längsschnitt mit Kunststoffrückständen am Boden des Steuerkolbens und am Auslaufrohr

Figur 2 das Auslaufrohr des Mischkopfes gegenüber einem aufheizbaren Formstück

Figur 3 den Einfüllkonus eines Formwerkzeuges gegenüber einem aufheizbaren Formstück.

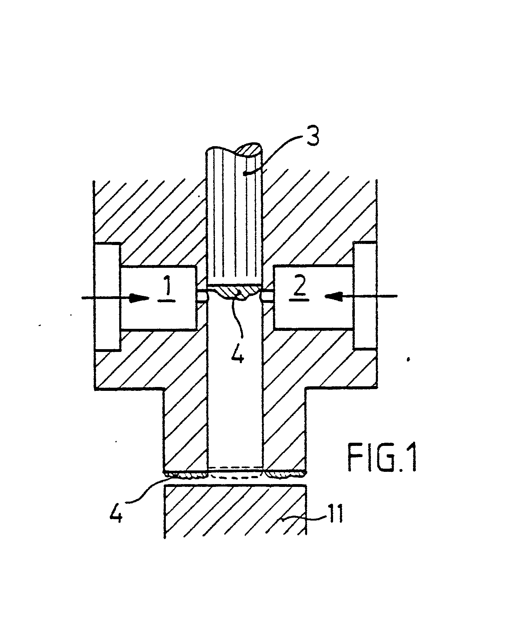

Bei dem in Figur 1 schematisch im Längs-

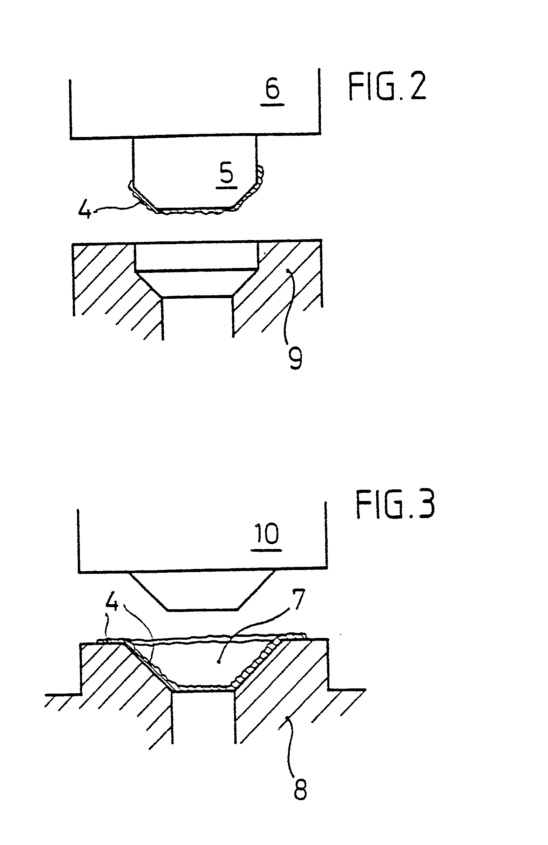

schnitt dargestellten Mischkopf sind die Eintragsdüsen 1 und 2 erkennbar und dazwischen der Steuerkolben 3. Am Boden des Steuerkolbens und des Auslaufrohres haften Kunststoffrückstände 4, die ein direktes Zusammentreffen der Komponentenstrahlen verhindern. Zu diesen Rückständen kommt es nicht, wenn sie gemäß der Erfindung durch Erhitzen zersetzt und die gasförmigen Zersetzungsprodukte entfernt werden, und zwar bei vorgefahrenem Steuerkolben (geschlossener Mischkopf) zusammen mit Rückständen an der Stirnfläche des Auslaufrohres. Dazu werden die Kunststoffrückstände 4 am Auslauf und Kolbenboden (gestrichelte Darstellung in Figur 1) bzw. am Auslaufrohr 5 des Mischkopfes 6 (Figur 2) bzw. am Einfüllkonus 7 eines Formwerkzeuges 8 (Figur 3) mit einem an die Form dieser Teile 5 und 7 angepaßten und auf etwa 500 °C aufgeheizten Formstück 9, 10, 11 in Kontakt gebracht. Die dabei entstehenden Zersetzungsprodukte werden unmittelbar abgesaugt, so daß sie nicht in die Umgebung gelangen können.

Die mit Kunststoffrückständen belegten Teile können auch selbst aufgeheizt werden, beispielsweise durch Widerstandsheizung oder induktive Aufheizung oder hochfrequente Übertragung der Heizenergie. Eine weitere Möglichkeit besteht im Durchströmen der Teile mit einem Heizmedium. Zu diesem Zweck ist es vorteilhaft, diese Teile doppelwandig auszuführen, um einen Zwischenraum für den Medienstrom zu schaffen. Die Formstücke 9, 10 und 11 können selbstverständlich auf die gleiche Weise aufgeheizt werden.

Anwendungstechnische Versuche haben gezeigt, daß die betroffenen Teile innerhalb weniger Sekunden vollständig und ohne Beschädigung von den Kunststoffrückständen befreit werden.

**Patentansprüche**

1. Verfahren zum Entfernen von Kunststoffrückständen an Mischvorrichtungen für Kunststoffkomponenten und daraus zu befüllenden Formwerkzeugen durch Erhitzen der Rückstände, dadurch gekennzeichnet, daß die Rückstände des Kunststoffgemisches während des Betriebseinsatzes der damit behafteten Teile durch Erhitzen mittels eines auf die erforderliche Temperatur gebrachten Kontaktteils (9, 10, 11) zersetzt und die Zersetzungsprodukte abgesaugt werden.

2. Vorrichtung zur Durchführung des Verfahrens nach Anspruch 1, mit einer Mischvorrichtung für die Kunststoffkomponenten, die einen Mischraum aufweist, in dem ein in seiner zurückgezogenen Stellung die Eintrittsöffnungen (1, 2) für die Kunststoffkomponenten freigebender Steuerkolben (3) bis zum Auslauf bewegbar ist, dadurch gekennzeichnet, daß ein aufheizbares Formteil (9, 10, 11) mit dem Auslauf und dem in diesen Bereich bewegten Kolbenboden in Kontakt bringbar ist.

**Claims**

1. A method of removing plastic residues in mixing apparatus for plastic components, and on molding tools to be filled from such apparatus, by heating the residues, wherein the residues of the plastic mixture, during operational use of the parts to which said residues adhere, are vaporized by heating using a contact member (9, 10, 11) brought to the necessary temperature, and the vapors are exhausted.

2. A device for carrying out the method as claimed in claim 1, comprising a mixing apparatus for the plastic components, which apparatus includes a mixing chamber in which a piston valve (3) which uncovers the inlet openings (1, 2) for the plastic components in its retracted position, can be moved up to the outlet, wherein a heatable shaped member (9, 10, 11) can be brought up against the outlet to make contact with the end face of the piston moved into this region.

**Revendications**

1. Procédé d'élimination de résidus de matière plastique sur des appareils mélangeurs pour composants de matière plastique et les outils de formage à remplir de ces composants, par chauffage du résidus, caractérisé par le fait qu'on décompose les résidus du mélange de matière plastique, pendant le fonctionnement des parties qui en sont chargées, par chauffage, au moyen d'une partie de contact (9, 10, 11) portée à la température nécessaire, et on évacue par aspiration les produits de décomposition.

2. Dispositif pour la mise en œuvre du procédé selon la revendication 1, avec appareil mélangeur pour les composants de matière plastique, qui possède une chambre de mélange, dans laquelle un piston de manœuvre (3) dégageant, dans sa position rétractée, les orifices d'entrée (1, 2) des composants en matière plastique, peut être déplacé jusqu'à la sortie, caractérisé par le fait qu'une pièce de forme (9, 10, 11) chauffable peut être amenée en contact avec la sortie et le fond de piston qui a été amené dans cette zone.

FIG.1

FIG.2

<u>6</u>

<u>5</u>

4

9

FIG.3

<u>10</u>

4

7

8